## Europäisches Patentamt
## European Patent Office
## Office européen des brevets

(19)

(11) Veröffentlichungsnummer : **0 203 883**
**B1**

(12) **EUROPÄISCHE PATENTSCHRIFT**

(45) Veröffentlichungstag der Patentschrift :
07.06.89

(21) Anmeldenummer : 86810173.4

(22) Anmeldetag : 15.04.86

(51) Int. Cl.⁴ : **A 47 J 39/00**

(54) **Vorrichtung zum Kühlen, Aufbewahren und Wiedererwärmen von Speisen.**

(30) Priorität : 29.04.85 CH 1819/85

(43) Veröffentlichungstag der Anmeldung :
03.12.86 Patentblatt 86/49

(45) Bekanntmachung des Hinweises auf die Patenterteilung : 07.06.89 Patentblatt 89/23

(84) Benannte Vertragsstaaten :
AT BE DE FR GB IT LU NL SE

(56) Entgegenhaltungen :
DE–A– 2 711 088
DE–A– 2 810 685
FR–A– 2 345 123
FR–A– 2 357 221
FR–A– 2 469 158
US–A– 3 079 912
US–A– 3 394 007
US–A– 4 005 745

(73) Patentinhaber : Berndorf Luzern AG
Murbacherstrasse 3
CH-6003 Luzern (CH)

(72) Erfinder : Meier, Hermann
Sonnsyterain 23
CH-6048 Horw (CH)

(74) Vertreter : Seifert, Helmut E.
RITSCHER & SEIFERT Patentanwälte VSP Kreuzstrasse 82
CH-8032 Zürich (CH)

## Beschreibung

Die vorliegende Erfindung betrifft eine Vorrichtung zum Kühlen, Aufbewahren und Wiedererwärmen von essfertig vorbereiteten und zu mehrteiligen Mahlzeiten angerichteten Speisen, mit einem zum Einstellen übereinanderstehender, mit den Mahlzeiten belegter Tabletts vorgesehenen Schrank, der ein Kühlaggregat und mindestens einen Generator für induktiv übertragbare elektrische Energie aufweist, sowie mit Ess- und/oder Trinkgeschirr, das für die selektiv wiedererwärmbaren Teile der Mahlzeit mit mindestens einer zum induktiven Erwärmen des Gefässinnenraums geeigneten, elektrisch leitenden Schicht versehen ist.

Die moderne Lehre von der physiologisch richtigen Ernährung empfiehlt für arbeitende und auch für kranke Menschen eine vielfältig zusammengesetzte Kost, deren Zubereitung mit der Forderung nach einem rationellen Arbeitsablauf beim Anrichten der Speisen oft nur schwer zu vereinbaren ist. Es ist darum insbesondere in Betriebskantinen und Krankenhausküchen gebräuchlich, die Mahlzeiten nicht auf die Essenszeiten fertigzustellen, sondern im voraus zuzubereiten, auf einem Tablett anzurichten und mitsamt dem Tablett kühlzustellen und erst kurz vor dem Servieren wieder zu erwärmen. Das ermöglicht, mit relativ wenig Personal eine grosse Anzahl mehrteiliger Mahlzeiten vorzubereiten, die dann gleichzeitig serviert werden können.

Eine typische mehrteilige Mahlzeit besteht beispielsweise aus einer Suppe, Fleisch mit einer Beilage und Gemüse, Salat oder Obst, einem Dessert und einem Getränk. Weil von dieser Mahlzeit vor dem Servieren nur die Suppe, das Fleisch, die Beilage und das Gemüse wiedererwärmt werden müssen, der Salat und das Obst beim Erwärmen aber ungeniessbar würden, ist in der FR-PS 2 209 285 (72.44646) ein Lagerschrank beschrieben, der zwei thermisch voneinander isolierbare Sektionen aufweist, die beide kühlbar und wovon die eine mittels in geeigneter Weise angeordneter elektrischer Heizwiderstände heizbar ist. Wenn die Teile einer Mahlzeit in geeigneter Weise auf einem Tablett angerichtet werden, kann mit diesem Kühlschrank zuerst die gesamte Mahlzeit gekühlt und dann vor dem Servieren ein Teil der Mahlzeit wiedererwärmt werden, während der andere Teil weiter gekühlt wird. Die CH-PS 586 538 zeigt einen Kühlschrank zum Einstellen von Tabletts, von denen jedes mindestens eine heizbare Vertiefung aufweist, in die ein Behälter für einen aufzuwärmenden Teil einer Mahlzeit eingesetzt werden kann. Diese Patentschrift zeigt auch wärmeisolierende Deckel für die zu erwärmenden Behälter, mit denen die Wärmeableitung in die Umgebung des Behälters vermieden werden soll. Schliesslich ist in der DE-OS 27 11 088 eine Vorrichtung gezeigt, mit der Speisebehälter, die eine geeignete Metallisierung aufweisen, induktiv erwärmt werden können. Dazu sind im Inneren der teilweise hohlen Behälterwand oder auf der Innenfläche des Behälters Metallschichten derart angeordnet, dass die Wärme in den Behälterinnenraum abgeleitet und ein Wärmeverlust nach aussen möglichst wirksam verhindert wird.

Wie die praktische Verwendung der beschriebenen Vorrichtungen gezeigt hat, entspricht das Servieren einer kompletten Mahlzeit, deren eine Teile auf Esstemperatur erwärmt und deren andere Teile noch gekühlt sind, aber nicht den Vorstellungen bzw. Essgewohnheiten der Verbraucher, die im allgemeinen einen Salat oder Obst bzw. ein Essgeschirr und -besteck mit Kühlschranktemperatur ablehnen.

Der vorliegenden Erfindung lag darum die Aufgabe zugrunde, den beschriebenen Nachteil zu beheben und eine Vorrichtung zu schaffen, die ermöglicht, dass jeder der auf einem Tablett angerichteten Teile einer Mahlzeit und das Essgeschirr bzw. -besteck beim Servieren die vom Verbraucher erwartete Temperatur aufweist. Diese Aufgabe wird erfindungsgemäss mit einer Vorrichtung der eingangs genannten Art gelöst, die dadurch gekennzeichnet ist, dass zum Temperieren der anderen Teile der Mahlzeit sowie von Geschirr und Besteck auf Umgebungstemperatur das induktiv erwärmbare Geschirr zum Ableiten von Wärme an die äussere Umgebung des Geschirrs geeignet ist.

Die erfindungsgemäss Vorrichtung ermöglicht, die wiederzuerwärmenden Teile einer auf einem Tablett angerichteten, im Kühlschrank aufbewahrten Mahlzeit selektiv auf Esstemperatur zu erwärmen und die anderen Teile nur so weit zu temperieren, dass diese mit Appetit verzehrt bzw. angenehm zu verwenden sind. Die Vorrichtung ist besonders geeignet für das personalsparende « Tablett-Verteilsystem », bei dem Tabletts mit im voraus angerichteten vollständigen Mahlzeiten, dem erforderlichen Geschirr und dem Essbesteck in Kühlschränke eingestellt und dann gleichzeitig einem grösseren Personenkreis serviert werden.

Bei einer ersten, besonders bevorzugten Ausführungsform der Vorrichtung enthält das induktiv erwärmbare und zum Ableiten von Wärme an die äussere Umgebung vorgesehene Geschirr mindestens eine auf der Aussenwand angeordnete, gürtelförmige, elektrisch leitende Schicht. Bei einer weiteren bevorzugten Ausführungsform ist dem Geschirr ein Deckel zugeordnet, auf dessen Aussenfläche eine elektrisch leitende Schicht angeordnet ist oder der gesamthaft aus elektrisch leitendem Material besteht.

Nachfolgend wird ein Ausführungsbeispiel der erfindungsgemässen Vorrichtung mit Hilfe der Figuren beschrieben. Es zeigen :

Fig. 1 die Draufsicht auf ein Tablett mit einer aufgestellten, mehrteiligen Mahlzeit und dazugehörigem Essbesteck,

Fig. 2 den Schnitt durch ein Speisegefäss mit Deckel, das zum induktiven Erwärmen des Gefässinneren und zum Ableiten von Wärme an dessen äussere Umgebung geeignet ist und

Fig. 3 die Vorderansicht eines Schranks zum Kühlen, Aufbewahren und Wiedererwärmen vorbereiteter Mahlzeiten.

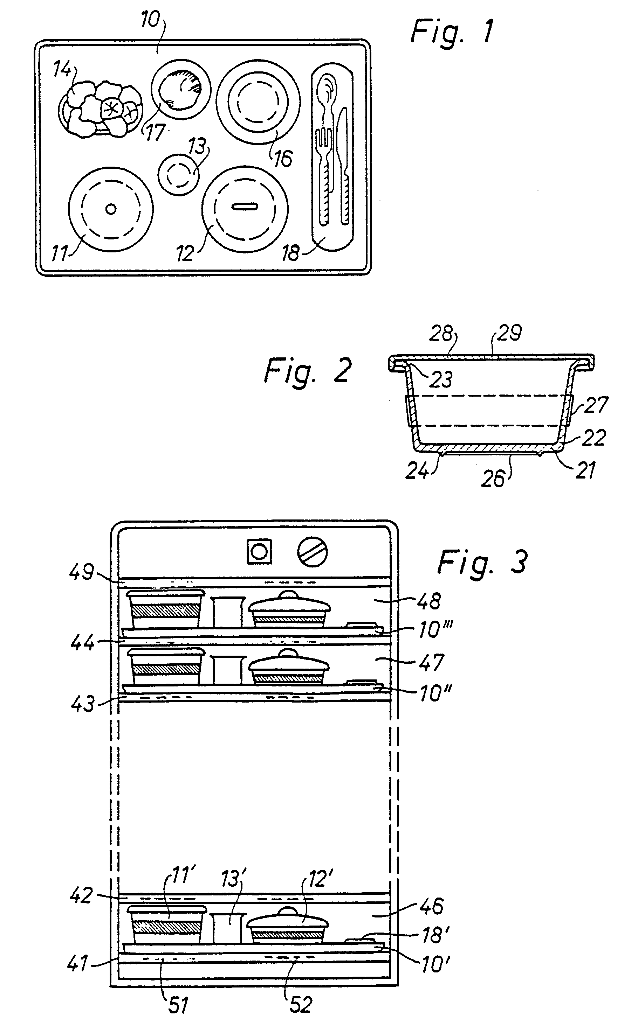

Die Fig. 1 zeigt die Draufsicht auf ein Tablett 10, das für den Service entsprechend dem « Tablett-Verteilsystem » hergerichtet ist. Auf der einen (in der Figur unteren) Längshälfte des Tabletts sind nebeneinander eine Suppenterrine 11 und eine Fleisch- und Beilagenschüssel 12 aufgestellt. Die Terrine und die Schüssel sind zum Erwärmen vorgesehen und mit einem Deckel bzw. einer Cloche abgedeckt. Etwa in der Mitte des Tabletts steht eine Tasse 13 für Kaffee, Tee oder Milch aufgestellt, und auf der anderen (in der Figur oberen) Längshälfte des Tabletts stehen eine Platte 14 mit Salat, ein zum Schöpfen der Suppe oder Auftragen von Fleisch und Beilage vorgesehener Teller 16 und zwischen diesen eine Schmale 17 mit einer Frucht. Längs der einen (in der Figur rechten) Schmalseite des Tabletts ist eine Mulde 18 eingeformt, in der ein komplettes Essbesteck liegt. Diese letzteren Gefässe und deren Inhalt sowie das Essbesteck sollen vor dem Servieren nicht erwärmt, aber temperiert werden. Das Tablett weist vorzugsweise unter jedem der gezeigten Gefässe eine in der Figur mit einer unterbrochenen Linie gezeichnete, ringförmige Vertiefung auf, in die der nach unten vorstehende, ebenfalls ringförmige Wulst der aufgestellten Gefässe eingesetzt werden kann, um das Verschieben der Gefässe gegenüber dem vorgesehenen Platz zu verhindern. Das ist besonders wichtig für die Terrine und die Schüssel. deren Inhalt erwärmt werden soll.

Die Fig. 2 zeigt den Schnitt durch eine Suppenterrine, die zum induktiven Erwärmen des Innenraums und Temperieren der Umgebung geeignet ist. Die Terrine weist einen flachen Boden 21 auf, eine steile Seitenwand 22, die oben in einen nach aussen abgebogenen Rand 23 übergeht. An der Aussenfläche des Bodens ist der schon erwähnte ringförmige und nach unten vorstehende Wulst 24 angeformt, der zum Einsetzen in die oben beschriebene ringförmige Vertiefung im Tablett vorgesehen ist. Auf der vom Wulst eingeschlossenen Bodenfläche und auf der Aussenfläche der Seitenwand sind eine dünne kreisflächen- bzw. ringförmige Metallisierung 26 bzw. 27 aufgetragen. Die relativ hohe Terrine ist mit einem flachen Metalldeckel 28 bedeckt. Der Deckel weist in der Mitte eine kleine Oeffnung 29 auf, die als Dampfabzug und gegebenenfalls auch zum Abheben des Deckels dient.

Die Fig. 3 zeigt die Vorderansicht eines zur Ausführung des erfindungsgemässen Verfahrens geeigneten Kühlschranks. Der Schrank enthält zehn übereinander angeordnete Tablare (wovon der besseren Uebersicht wegen nur die Tablare 41, 42, 43 und 44 gezeigt sind), die den Innenraum des Schranks in zehn Schrankfächer unterteilen (wovon nur die Fächer 46, 47 und 48 gezeigt sind). Ueber dem obersten Fach 48 ist ein weiteres Tablar 49 angeordnet. Jedes Tablar enthält zwei Induktionsspulen, die als spiralförmige, elektrische Leiter ausgebildet sind und wovon der deutlicheren Darstellung wegen nur die Spulen 51, 52 im untersten Tablar 41 identifiziert sind. Die Induktionsspulen sind an den Ausgang eines nicht gezeigten Tonfrequenzgenerators angeschlossen. Jedes Schrankfach ist zum Einstellen eines Tabletts 10', 10'', 10''' usw. vorgesehen, auf das das für eine Mahlzeit erforderliche Geschirr aufgestellt ist. In der gezeigten Seitenansicht sind einfacherweise wieder nur die Suppenterrine 11', die Fleisch- und Beilagenschüssel 12', die Tasse 13' und die Mulde 18' für das Essbesteck auf bzw. in dem Tablett 10' mit Bezugszeichen versehen.

Der Kühlschrank ist vorzugsweise auf seiner Frontseite mit einer Glastür verschlossen, was die visuelle Beobachtung des Inhalts ermöglicht, und enthält selbstverständlich ein Kühlaggregat und den bereits erwähnten Tonfrequenzgenerator. Kühlaggregate und Tonfrequenzgeneratoren sind jedem Fachmann hinreichend bekannt, weshalb auf deren detaillierte Beschreibung hier ausdrücklich verzichtet wird.

Es versteht sich aus dem Vorstehenden, dass die ringförmigen Vertiefungen in den Tabletts so angeordnet sind, dass sie nach dem Einstellen eines Tabletts in ein Schrankfach möglichst genau über den Induktionsspulen im Tablar stehen, so dass eine optimale Uebertragung der elektrischen Energie von den Induktionsspulen zur Metallisierung der in den Vertiefungen stehenden Gefassen erreicht wird. Wie jeder Fachmann weiter sofort erkennt, ist das Tablar 49 über dem obersten Fach 48 notwendig, damit auch der Deckel und die Cloche auf der Terrine bzw. der Schüssel des eingestellten Tabletts 10''' von den Induktionsspulen in diesem Tablar erwärmt werden.

Bei der Verwendung der beschriebenen Vorrichtung werden die einzelnen Teile einer Mahlzeit in der Küche vorbereitet, in den entsprechenden Gefässen angerichtet, die Gefässe auf das Tablett gestellt und mit dem Tablett in den Kühlschrank eingestellt. Der Kühlschrank wird vorzugsweise schon vor dem Einstellen des Tabletts vorgekühlt, weil nach den neuesten Erkenntnissen der Ernährungslehre das rasche Abkühlen der Speisen deren Haltbarkeit verlängert und deren Aroma besser bewahrt.

Vor dem Servieren der Mahlzeiten wird das Kühlaggregat des Schranks abgestellt und der Tonfrequenzgenerator eingeschaltet. Der tonfrequente Strom erzeugt dann in den Induktionsspulen der Tablare ein elektromagnetisches Wechselfeld, das überwiegend quer zur Fläche der Spulen, d. h. nach oben und nach unten abgestrahlt wird. Das Wechselfeld induziert in der Metallisierung auf der Aussenfläche der Böden und der Seitenwände der über der Spule eingestellten Gefässe sowie im Metalldeckel der unter der Spule eingestellten Gefässe Ströme, die die Metallisierung bzw. den Deckel erwärmen. Die Wärme wird durch die Gefässwände bzw. den Deckel in das Gefässinnere weitergeleitet, um den Gefässinhalt zu erwärmen, aber auch an die Umgebung des Gefässes abgegeben. Die Folge davon ist, dass beim Herausnehmen des Tabletts mit den erwärmten Speisen aus dem Kühlschrank auch die nicht zu erwärmenden Speisen und insbesondere das Essgeschirr und -besteck auf Raumtemperatur temperiert sind.

Bei einer erprobten Ausführungsform der Vorrichtung wurde im Schrank ein für Kühlschränke gebräuchliches Kühlaggregat verwendet. Das Nutzvolumen des Schranks war in zwölf Fächer unterteilt, und in jedes Fach konnte ein Tablett mit den Abmessungen der Euronorm (36 x 53 cm) eingestellt werden. Die lichte Höhe jedes Fachs betrug 9 cm, was die Verwendung einer Suppenschüssel mit 250 cm³ Inhalt ermöglicht. Alle Gefässe waren aus Hotelporzellan gefertigt, die Metallisierung und der Ganzmetalldeckel aus einem ferromagnetischen Werkstoff. Der Tonfrequenzgenerator arbeitete mit einer Frequenz von 25 kHz, die Induktionsspulen in den Tabletts hatten eine Induktivität von je 350 µH. Obwohl die übertragene und zum Erwärmen der Speisen bzw. Temperieren der Umgebung der Gefässe nutzbare Energie vom Strom durch die Induktionsspulen, vom Abstand zwischen den Spulen und der Metallisierung der Gefässe bzw. den Metalldeckeln, von der Fläche und der Dicke sowie der magnetischen Permeabilität der Metallisierung bzw. des Metalls abhängig ist, war es möglich, mit einem Generator, der eine Ausgangsleistung von 3 kW erzeugt, innert weniger als 30 min auf elf Tabletts je eine Suppenterrine und eine Fleischschüssel samt Inhalt von 4 °C auf über 65 °C zu erwärmen und das Essgeschirr, das Essbesteck und alle Beilagen auf Zimmertemperatur zu temperieren.

Es versteht sich, dass die erfindungsgemässe Vorrichtung an spezielle Betriebsbedingungen angepasst werden kann. Beispielsweise kann auf die zum induktiven Erwärmen der Aussenfläche der Seitenwände der Gefässe vorgesehene ringförmige Metallisierung verzichtet werden, wenn die Wärmeleitfähigkeit der Gefässwand ausreichend ist, um Wärme aus dem Innenraum nach aussen abzuführen. Weiter kann anstelle des in Fig. 2 gezeigten flachen Deckels auch ein hoher Deckel (Cloche) mit einem Griff verwendet werden. Ein derartiger Griff kann dann vorteilhaft sein, wenn eine zu starke Erwärmung des Deckels und entsprechende Oberhitze auf den Gefässinhalt vermieden werden soll. Es ist auch möglich, anstelle des beschriebenen einen Tonfrequenzgenerators für sämtliche Tablare des Schranks, Jedem Tablar einen separaten Tonfrequenzgenerator zuzuordnen. Weiter kann auf die fest eingebauten Tablare verzichtet werden, wenn die Seitenwände des Schranks Führungs- und Tragschienen für die Tabletts aufweisen, die Induktionsspulen im Tablett eingebaut sind und jedes Tablett Mittel aufweist, die eine Uebertragung der elektrischen Energie vom Tonfrequenzgenerator zu der oder den Induktionsspulen ermöglicht. Schliesslich können mehrere Schränke der in Fig. 3 gezeigten Art seitlich aneinandergebaut werden und dadurch das Volumen des Schranks bzw. die Anzahl der einstellbaren Tabletts vervielfacht werden.

Es ist auch nicht nötig, dass die Tabletts mit einer Mulde für das Besteck versehen sind. Das Besteck kann an einem beliebigen Ort neben oder zwischen dem beschriebenen Geschirr aufgelegt werden, so wie es für ein gewähltes « Tablett-Verteilsystem » am vorteilhaftesten ist. Und es ist auch nicht nötig, dass Terrinen, Schüsseln, Tassen und Teller verwendet werden, deren Bodenfläche einen Wulst aufweist, der zum Einsetzen in Vertiefungen des Tabletts verwendet werden kann. Induktiv zu erwärmende Gefässe mit einem flachen Boden können einfacherweise in die (im Kühlschrank hinteren) Eckbereiche des Tabletts gestellt werden, und jede Fachwand des Kühlschranks kann fest eingebaute Führungselemente aufweisen, die beim Einstellen eines Tabletts das anstossende Gefäss in die zum Erwärmen vorgesehene Position verschieben.

## Patentansprüche

1. Vorrichtung zum Kühlen, Aufbewahren und Wiedererwärmen von essfertig vorbereiteten und zu mehrteiligen Mahlzeiten angerichteten Speisen, mit einem zum Einstellen übereinanderstehender, mit den Mahlzeiten belegter Tabletts vorgesehenen Schrank (Fig. 3), der ein Kühlaggregat und mindestens einen Generator für induktiv übertragbare elektrische Energie aufweist, sowie mit Ess- und/oder Trinkgeschirr (Fig. 2), das für die selektiv wiedererwärmbaren Teile der Mahlzeit mit mindestens einer zum induktiven Erwärmen des Gefässinnenraums geeigneten, elektrisch leitenden Schicht (26, 27) versehen ist, dadurch gekennzeichnet, dass zum Temperieren der anderen Teile der Mahlzeit sowie von Geschirr und Besteck auf Umgebungstemperatur das induktiv erwärmbare Geschirr zum Ableiten von Wärme an die äussere Umgebung des Geschirrs geeignet ist.

2. Vorrichtung nach Anspruch 1, dadurch gekennzeichnet, dass das induktiv erwärmbare und zum Ableiten von Wärme an die äussere Umgebung geeignete Geschirr eine auf der Aussenwand angeordnete, gürtelförmige, elektrisch leitende Schicht (27) enthält.

3. Vorrichtung nach Anspruch 1, dadurch gekennzeichnet, dass dem induktiv erwärmbaren und zum Ableiten von Wärme an die äussere Umgebung geeigneten Geschirr ein Deckel (28) zugeordnet ist, auf dessen Aussenfläche eine elektrisch leitende Schicht angeordnet ist.

4. Vorrichtung nach Anspruch 1, dadurch gekennzeichnet, dass dem induktiv erwärmbaren und zum Ableiten von Wärme an die äussere Umgebung geeigneten Geschirr ein Deckel (28) aus einem elektrisch leitenden Material zugeordnet ist.

## Claims

1. Device for cooling, storing and reheating foods prepared ready to eat and arranged as multi-component meals ; including a cupboard (Fig. 3) for receiving and supporting mutually superimposed trays to carry the meals, and including a refrigerator and at least one generator for electric energy capable of being transferred by induction, and including table-ware for food and/or beverages (Fig. 2) provided with at least one electrically conductive layer (26, 27) to inductively heat the inner space of the tableware for those parts of the meal that are to be reheated selectively, characterized in that the inductively heatable table-ware is suitable to conduct heat to the outer ambient of the table-ware for raising the temperature of the other parts of the meal as well as of table-ware and of table-cutlery to room temperature.

2. The device of claim 1 characterized in that the tableware that is suitable for being heated inductively and for conducting heat to the outer ambient comprises a belt-shaped electrically conducting layer provided at the outer wall.

3. The device of claim 1, characterized in that a lid (28) is associated with the table-ware which is suitable for being heated inductively and for conducting heat to the outer ambient, said lid having an electrically conducting layer arranged at its outer wall.

4. The device of claim 1 characterized in that a lid (28) made of an electrically conducting material is associated with the table-ware suitable for being heated inductively and for conducting heat to the outer ambient.

## Revendications

1. Dispositif pour refroidir, conserver et réchauffer des aliments préparés à la consommation et dressés sous forme de repas à plusieurs parts, comportant une armoire (fig. 3) prévue pour recevoir, en disposition superposée, des plateaux garnis de repas, cette armoire présentant un groupe frigorifique et au moins un générateur d'énergie électrique pouvant être transmise par induction, et de la vaisselle pour manger et/ou boire (fig. 2), munie, pour le réchauffement par induction de l'intérieur d'un récipient pour les parties des repas pouvant être réchauffées sélectivement, d'au moins une couche (26, 27) conductrice d'électricité appropriée, caractérisé en ce que la vaisselle réchauffable par induction est adaptée à dissiper de la chaleur à l'environnement extérieur de la vaisselle dans le but de tempérer à la température ambiante les autres parties du repas ainsi que de la vaisselle et des éléments de couverts.

2. Dispositif selon la revendication 1, caractérisé en ce que la vaisselle réchauffable par induction et appropriée à dissiper de la chaleur à l'environnement extérieur présente, sur la paroi extérieure, une couche (27) conductrice d'électricité en forme de ceinture.

3. Dispositif selon la revendication 1, caractérisé en ce qu'un couvercle (28) est associé à la vaisselle réchauffable par induction et appropriée à dissiper de la chaleur vers l'environnement extérieur, ce couvercle portant sur sa face extérieure une couche conductrice d'électricité.

4. Dispositif selon la revendication 1, caractérisé en ce qu'un couvercle (28) en une matière conductrice d'électricité est associé à la vaisselle réchauffable par induction et appropriée à dissiper de la chaleur vers l'environnement.

Fig. 1

Fig. 2

Fig. 3